# EUROPEAN PATENT APPLICATION

(11) **EP 2 940 945 A1**
(43) Date of publication of application: **04.11.2015**
(21) Application number: 12890973.6
(22) Date of filing: 28.12.2012
(51) Int. Cl.: H04L 12/701

(54) **PACKET REPEATER, PACKET TRANSFER METHOD, AND COMMUNICATION SYSTEM**

(71) Applicant: Hitachi, Ltd., Tokyo 100-8280 (JP)
(72) Inventor: NAKAMOTO, Yoichi, Tokyo 100-8280 (JP); MOCHIZUKI, Yoshinori, Tokyo 100-8280 (JP); EBATA, Tomoichi, Tokyo 100-8280 (JP); KOIZUMI, Minoru, Tokyo 100-8280 (JP)
(74) Representative: MERH-IP Matias Erny Reichl Hoffmann
(86) International application number: PCT/JP2012/084008
(87) International publication number: WO 2014/102993

(57) **Abstract**

A packet relay apparatus having one or more communication interfaces coupled to a network, a processor coupled to the one or more communication interfaces, and a memory coupled to the processor, said packet relay apparatus holds path information including a plurality of combinations of a final destination and a next transfer destination of a packet, and conditions for applying individual combinations of the path information; determining, on the basis of information included in a received packet, whether or not the received packet satisfies the condition for applying each combination of the path information; and transferring the received packet to one or more next transfer destinations of one or more combinations of the path information associated with the condition determined to be satisfied and including a final destination identical to final destination information included in the received packet.

## Description

### BACKGROUND OF THE INVENTION

This invention relates to a packet routing technique in a wide area network system.

Background arts in this technical field include JP 2000-209271 A (Patent Literature 1) and "OpenFlow Switch Specification Version 1.1.0 Implemented", [online], February 28, 2011, Open Networking Foundation, retrieved on October 16, 2012 from the Internet: <URL: http://www.openflow.org/documents/openflow-spec-v1.1.0.pdf> (Non-Patent Literature 1).

Patent Literature 1 discloses that a relay apparatus has a plurality of path tables and changes path tables in response to occurrence of a failure (refer to paragraphs [0013] and [0015], for example).

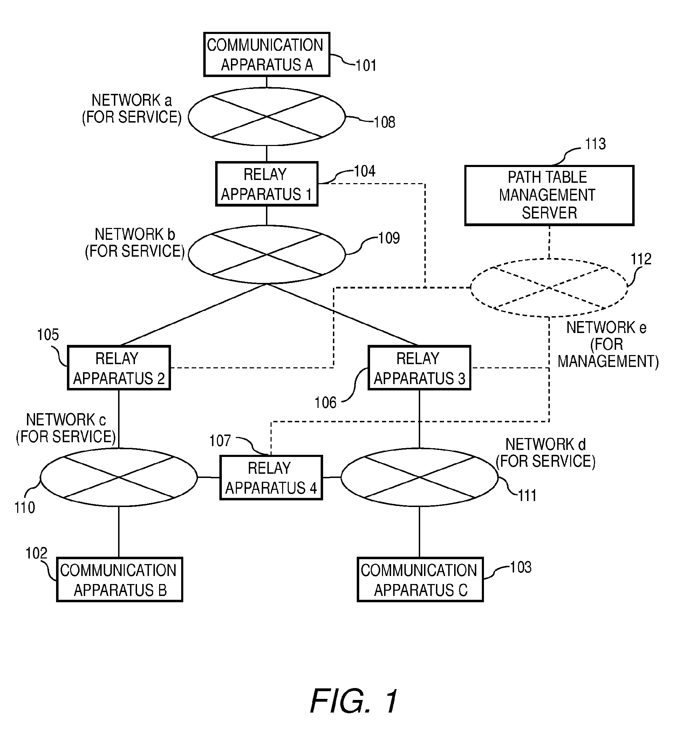

Non-Patent Literature 1 discloses that path information for relay apparatuses are managed by a controller different from the relay apparatuses and each relay apparatus updates its own path table by receiving a message to update the path information from the controller (refer to p. 3, Figure 1 and p. 24, Appendix A, for example).

### SUMMARY OF THE INVENTION

The recent development of information communication technology has increased large-scale and wide-area communication systems composed of a large number of communication terminals spread in a field. A typical large-scale communication system employs a network architecture including a plurality of relay apparatuses on an end-to-end communication path; each relay apparatus serially transfers communication packets in accordance with a predefined path table to achieve communications between communication terminals.

A problem common to such communication systems is simultaneous updating of path tables among the relay apparatuses. For example, at occurrence of a network error because of a failure in the network or a relay apparatus, the paths need to be reconfigured to avoid the failed point. When a communication terminal is newly added or when the address information is updated because of replacement of a communication terminal, the path tables also need addition or update of information.

To address the foregoing problem, Patent Literature 1 and Non-Patent Literature 1 disclose methods of changing and updating path tables. However, the techniques disclosed in these literatures might not be able to transfer packets sent around the time of changing the path tables in the relay apparatuses. For example, the first relay terminal that receives a packet sent by a sender terminal transfers the packet in accordance with the path table before the change; however, the path table has been changed when the packet arrives at the next relay apparatus, so that the packet might be lost or transferred to an unintended apparatus. Since the time to transport a packet from a relay apparatus to another is more than zero, this problem cannot be avoided even if all the relay apparatuses change the path tables completely synchronously.

This invention has been accomplished in view of the foregoing problem; an object of this invention is to provide a communication system that correctly delivers a packet sent at any time to the final destination by eliminating inconsistency in the path information in the relay apparatuses.

To solve the foregoing problem, there is provided a packet relay apparatus comprising: one or more communication interfaces coupled to a network; a processor coupled to the one or more communication interfaces; and a memory coupled to the processor, wherein the packet relay apparatus holds path information including a plurality of combinations of a final destination and a next transfer destination of a packet and conditions to apply individual combinations of the path information, and wherein the packet relay apparatus is configured to: determine whether a received packet satisfies any of the conditions to apply individual combinations of the path information based on information included in the received packet; and transfer the received packet to one or more next transfer destinations of one or more combinations of the path information associated with a condition determined to be satisfied and including a final destination identical to final destination information included in the received packet.

An embodiment of this invention provides a communication system that can correctly deliver a packet sent at any time to the final destination by eliminating inconsistency in the path information in the relay apparatuses.

### BRIEF DESCRIPTION OF THE DRAWINGS

FIG. 1 is a block diagram illustrating a configuration example of a system including a relay apparatus in an embodiment of this invention;
FIG. 2 is a block diagram illustrating a functional configuration of a relay apparatus in the embodiment;
FIG. 3 is a block diagram illustrating a hardware configuration of a relay apparatus in the embodiment;
FIG. 4 is an explanatory diagram of a path table validity period management table in the embodiment;
FIG. 5A is an explanatory diagram of a first path table in the embodiment;
FIG. 5B is an explanatory diagram of a second path table in the embodiment;
FIG. 6 is an explanatory diagram of a service packet transmitted between communication apparatuses in the embodiment;
FIG. 7 is a sequence diagram illustrating processing for a relay apparatus in the embodiment to transfer a received service message;
FIG. 8 is a sequence diagram illustrating processing for a path table management server to register a new path table to a relay apparatus in the embodiment;
FIG. 9 is a flowchart illustrating overall processing to be performed by the relay apparatus in the embodiment that has received a packet;
FIG. 10 is a flowchart illustrating transfer processing to be performed by the relay apparatus in the embodiment; and
FIG. 11 is a flowchart illustrating path table update processing to be performed by the relay apparatus in the embodiment.

### DETAILED DESCRIPTION OF THE EMBODIMENTS

An embodiment to implement this invention (hereinafter, merely referred to as embodiment) is described in detail with reference to the drawings as necessary.

### (Overall System Configuration)

A configuration example of a system in which a relay apparatus in this embodiment has been applied is described with FIG. 1.

FIG. 1 provides a configuration example of a system in which a communication apparatus A 101, a communication apparatus B 102, and a communication apparatus C 103 send and receive service messages with one another. The communication apparatus A 101 to communication apparatus C 103 are communication terminals running an application to make communications; they may be a server, a PC (personal computer), a controller, or the like. As shown in FIG. 1, the communication apparatus A 101 is connected with a relay apparatus 1_104 via a service network a 108. The relay apparatus 1_104 is connected with a relay apparatus 2_105 and a relay apparatus 3_106 via a service network b 109. The relay apparatus 2_105 is connected with a communication apparatus B 102 and a relay apparatus 4_107 via a service network c 110. The relay apparatus 3_106 is connected with a communication apparatus C 103 and the relay apparatus 4_107 via a service network d 111. The relay apparatus 1_104 to relay apparatus 4_107 are connected with a path table management server 113 via a management network e 112.

Each of the relay apparatus 1_104 to relay apparatus 4_107 has a function to transfer a service message in accordance with the transfer rules specified in a path table in the apparatus. For example, the relay apparatus 1_104 transfers a service message sent from the communication apparatus A 101 to the relay apparatus 2_105 or the relay apparatus 3_106, and transfers a service message sent by the communication apparatus B 102 and transferred from the relay apparatus 2_105 or a service message sent by the communication apparatus C 103 and transferred from the relay apparatus 3_106 to the communication apparatus A 101. The details of the function of the relay apparatus including the path table will be described later.

The path table management server 113 is a server to operate (add, update, and delete) path tables of the relay apparatus 1_104 to relay apparatus 4_107; it sends management messages for operating the path tables to the relay apparatuses via the management network e 112.

The service network a 108 to service network d 111 are networks for the communication apparatus A 101 to communication apparatus C 103 to communicate service messages with one another. The networks may be segmented logically like VLANs or network segments or otherwise segmented physically like networks using different media such as optical network and wireless network. The management network e112 is a network for the path table management server 113 and the relay apparatus 1_104 to relay apparatus 4_107 to communicate management messages for operating path tables with each other. Although this embodiment treats the service network and the management network as separate networks, these networks may be integrated to send service messages and management messages on the same integrated network. Although this embodiment is described based on an assumption that the service network and the management network are IP networks, they may be any kinds of networks other than the IP network. The signals used in communications may be one of electric, optical, radio, and audio signals or combinations thereof.

### (Configuration of relay apparatus)

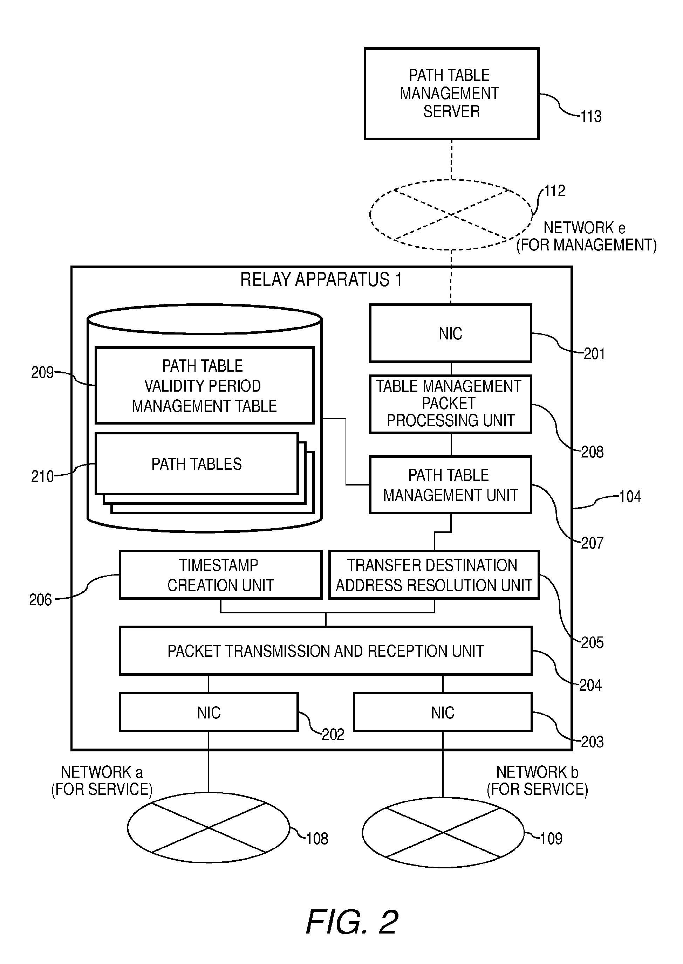

Next, a functional configuration of the relay apparatus 1_104 is described with FIG. 2.

The relay apparatus 1_104 includes a network interface (NIC) 201 to a NIC 203, a packet transmission and reception unit 204, a transfer destination address resolution unit 205, a timestamp creation unit 206, a path table management unit 207, a table management packet processing unit 208, a path table validity period management table 209, and a plurality of path tables 210.

The NIC 201 is an interface between the management network e 112 and the relay apparatus 1_104; it forwards a communication packet received from the management network e 112 to the table management packet processing unit 208 and sends out a communication packet received from the table management packet processing unit 208 to the management network e 112.

The NIC 202 and the NIC 203 are an interface between the service network a 108 and the relay apparatus 1_104 and an interface between the service network b 109 and the relay apparatus 1_104, respectively; each of them forwards a communication packet received from the service network a 108 or the service network b 109 to the packet transmission and reception unit 204 and sends out a communication packet received from the packet transmission and reception unit 204 to the service network a 108 or the service network b 109.

The packet transmission and reception unit 204 reassembles received packets forwarded from the NIC 202 or NIC 203 into a service message, and creates transmission packets from a service message and forwards them to the NIC 202 or NIC 203. In creating a transmission packet, the packet transmission and reception unit 204 acquires a timestamp or transfer destination address information required to create the transmission packet from the timestamp creation unit 206 or the transfer destination address resolution unit 205. The detailed sequence of transfer processing will be described later.

The transfer destination address resolution unit 205 acquires transfer destination address information from the path table management unit 207 based on the timestamp and address information of the received packet forwarded by the packet transmission and reception unit 204.

The timestamp creation unit 206 acquires a timestamp of the relay apparatus 1_104 at the time of reception of a received packet if the received packet does not include a timestamp, and forwards the timestamp to the packet transmission and reception unit 204.

The path table management unit 207 manages the path table validity period management table 209 and the path tables 210 stored in the relay apparatus 1_104. The path table management unit 207 retrieves a valid path table with reference to the path table validity period management table 209 with a key of timestamp information or retrieves transfer destination address information with reference to the path table 210 with a key of address information of a received packet in response to a request from the transfer destination address resolution unit 205. The path table management unit 207 further makes addition, update, or deletion of the path table validity period management table 209 and the path tables 210 in accordance with a request from the table management packet processing unit 208.

The table management packet processing unit 208 reassembles received packets forwarded by the NIC 201 into a path table management message, requests the path table management unit 207 to add, update, or delete a path table in accordance with the management message, stores the result into transmission packets, and forwards the packets to the NIC 201.

The path table validity period management table 209 is a table for managing the validity periods of the path tables 210 stored in the relay apparatus 1_104. This table is referred to by the path table management unit 207 to identify a path table valid in a specific time. The details of the table configuration will be described later.

The path tables 210 are tables for managing transfer destination addresses. Each table 210 is provided with a validity period; the path table management unit 207 selects a valid path table 210 based on the timestamp of a received packet to acquire a transfer destination address. The details of the table configuration will be described later.

### (Hardware configuration of relay apparatus)

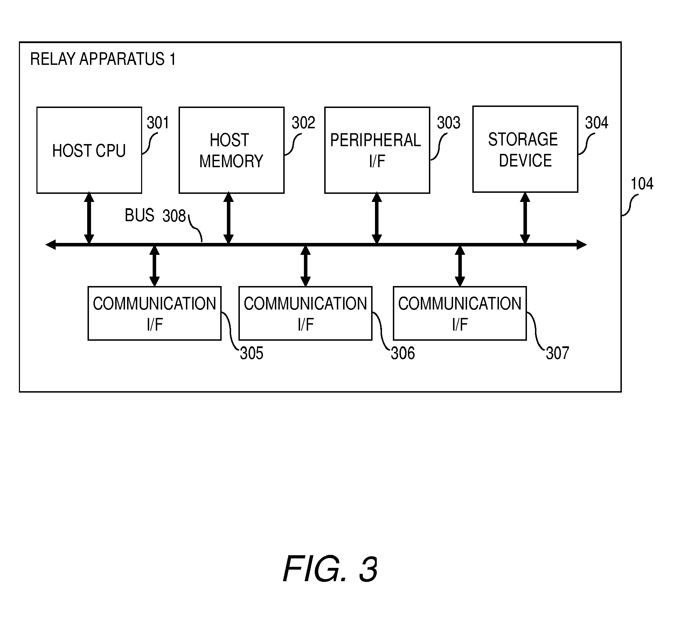

Next, a hardware configuration of the relay apparatus 1_104 is described with FIG. 3 (also FIG. 2 as necessary).

The relay apparatus 1_104 includes a host CPU (central processing unit) 301 for performing various kinds of processing, a host memory 302, a peripheral I/F 303, a storage device 304, communication I/Fs 305 to 307, and a bus 308. The host CPU 301, the host memory 302, the peripheral I/F 303, the storage device 304, and the communication I/Fs 305 to 307 are connected by the bus 308 to be able to communicate with one another.

The host CPU 301 executes programs.

The host memory 302 is used as a working memory and a temporary buffer for input/output data when the host CPU 301 executes a program.

The peripheral I/F 303 is an interface for the relay apparatus 1_104 to connect with input/output devices such as a mouse, a keyboard, and a monitor and peripheral devices such as an external storage inclusive of a USB (universal serial bus) memory.

The storage device 304 is made of a magnetic disk device, a flash ROM (read only memory) or the like; it stores an OS, a variety of drivers, a variety of application programs, and a variety of information to be used by the programs (for example, information specified by the administrator or the maintenance person).

The storage device 304 of the relay apparatus 1_104 in this embodiment stores the path table validity period management table 209 and the plurality of path tables 210. The packet transmission and reception unit 204, the transfer destination address resolution unit 205, the timestamp creation unit 206, the path table management unit 207, and the table management packet processing unit 208 are implemented by the host CPU 301 executing programs stored in the storage device 304. The processing in the following description performed by the aforementioned units is actually performed by the host CPU 301.

Alternatively, the functions of the aforementioned units may be partially or entirely implemented by dedicated hardware, instead of a general-purpose host CPU executing programs.

The communication I/F 305 to communication I/F 307 provide interfaces for the relay apparatus 1_104 to communicate with a communication apparatus, another relay apparatus, or the path table management server via the service network or the management network. The communication I/F 305 may be a NIC (network interface card). Although FIG. 3 shows only three communication interfaces, the relay apparatus 1_104 may have one or two, or otherwise four or more communication interfaces.

The relay apparatus 2_105, the relay apparatus 3_106, and the relay apparatus 4_107 can have the same functional configuration and hardware configuration as those of the relay apparatus 1_104; description of these relay apparatuses are omitted.

### (Path table validity period management table)

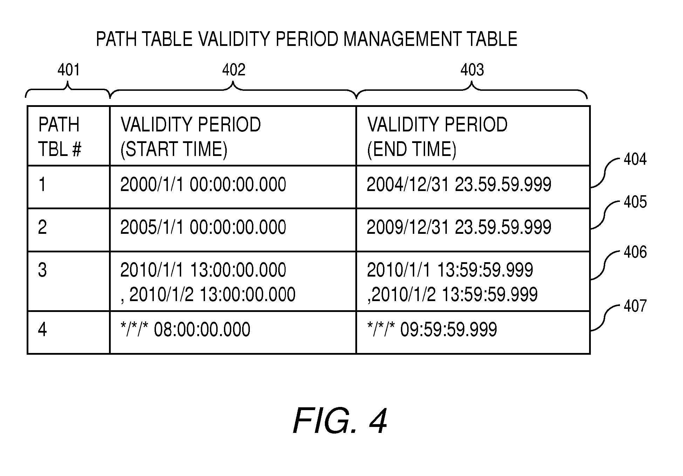

Next, information stored in the path table validity period management table 209 is described with FIG. 4.

The path table validity period management table 209 stores path table numbers 401, validity periods (start times) 402, and validity periods (end times) 403. The information in this table is preset by the administrator or the maintenance person of the relay apparatus 1_104 at the installation or delivered by the path table management server 113 through the management network e 112.

The column of path table numbers 401 is an area storing IDs for uniquely identifying each of a plurality of path tables 210 held in the relay apparatus 1_104. The column of validity periods (start times) 402 is an area storing dates and times of the beginning of the validity periods of each of the path tables. The column of validity periods (end times) 403 is an area storing dates and times of the end of the validity periods of each of the path tables. A validity period can be expressed as a plurality of periods or a cyclic period by using an asterisk (*) and a comma (,).

For example, the row 404 indicates that the path table 210 having a path table number "1" is valid for five years from January 1, 2000 until December 31, 2004; the row 405 indicates that the path table 210 having a path table number "2" is valid for five years from January 1, 2005 until December 31, 2009. Furthermore, the row 406 indicates that the table 210 having a path table number "3" is valid in the time periods from 13:00 until 14:00 on January 1, 2010 and from 13:00 until 14:00 on January 2, 2010. The row 407 indicates that the table 210 having a path table number "4" is valid in the time period from 8:00 until 10:00 every day.

Although FIG. 4 employs notation in year, month, and day, and in units of milliseconds for easy understanding, the path table validity period management table may employ notation in units of microseconds or less or in day of the week, or otherwise may express complex rules by using regular expressions or formulae.

### (Path table)

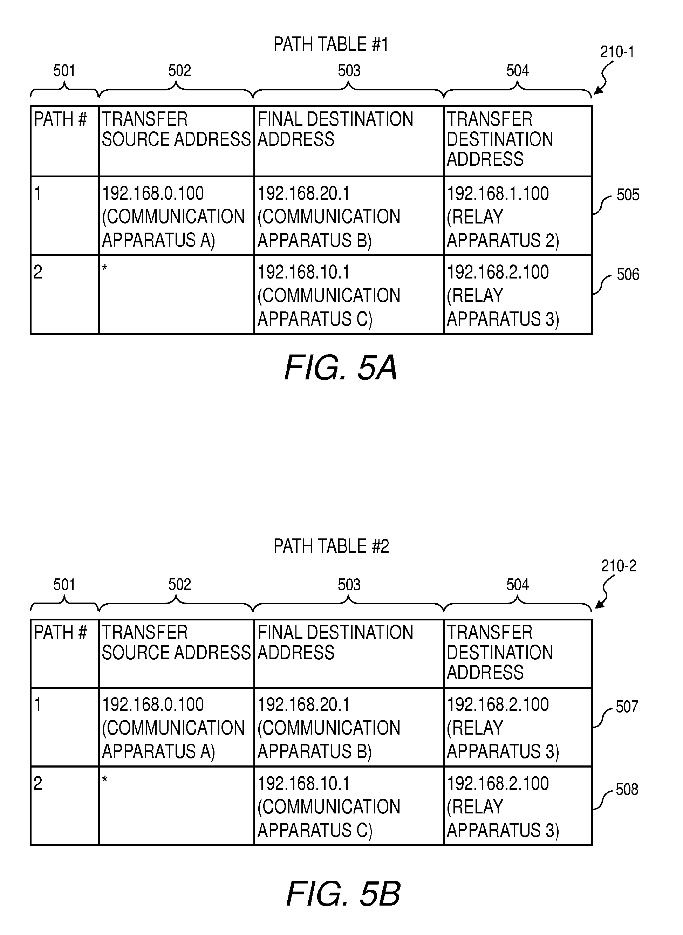

Next, information stored in path tables 210 is described with FIGS. 5A and 5B.

The path table #1_210-1 (FIG. 5A) and the path table #2_210-2 (FIG. 5B) are two examples of path tables 210 held by the relay apparatus 1_104; their respective path table numbers are "1" and "2". These path table numbers correspond to the path table numbers 401 in the path table validity period management table 209.

Each path table 210 stores path numbers 501, transfer source addresses 502, final destination addresses 503, and transfer destination addresses 504. The information in this table is preset by the administrator or the maintenance person of the relay apparatus 1_104 at the installation or delivered by the path table management server 113 through the management network e 112.

The column of path numbers 501 is an area storing IDs for uniquely identifying transfer rules of the table (that is, associations of address information in received packets with transfer destination addresses). In this example, the path numbers 501 are assigned uniquely in the relay apparatus; the relay apparatus retrieves a transfer destination address with a key of address information in a received packet. However, the path numbers may be assigned uniquely in the whole system; then, each packet is encapsulated with a path number so that each relay apparatus can retrieve a transfer destination address with a key of the path number.

The column of transfer source addresses 502 is an area storing address information on transfer source apparatuses of received packets. The transfer source apparatuses are the apparatuses that directly communicate with the relay apparatus 1_104, in the case of the example of FIG. 1, a transfer source apparatus may be the communication apparatus A 101, the relay apparatus 2_105, or the relay apparatus 3_106. Although FIGS. 5A and 5B provide IP addresses for address information, port numbers may be added or otherwise, other information for uniquely identifying transfer sources, such as MAC addresses or uniquely assigned node IDs, may replace the IP addresses.

The column of final destination addresses 503 is an area storing address information indicating final destinations of received packets. Although FIGS. 5A and 5B provide IP addresses for address information, port numbers may be added or otherwise, other information for uniquely identifying final destinations, such as MAC addresses or uniquely assigned node IDs, may replace the IP addresses.

The column of transfer destination addresses 504 is an area storing address information on next transfer destinations. Although FIGS. 5A and 5B provide IP addresses for address information, port numbers may be added or otherwise, other information for uniquely identifying transfer destinations, such as MAC addresses or uniquely assigned node IDs, may replace the IP addresses.

For example, the row 505 in the path table #1 indicates that, upon receipt of a packet addressed from the communication apparatus A 101 to the communication apparatus B 102, the relay apparatus 1_104 should transfer the packet to the relay apparatus 2_105. The row 506 indicates that, upon receipt of a packet addressed to the communication apparatus C 103, the relay apparatus 1_104 should transfer the packet to the relay apparatus 3_106 regardless of the transfer source of the packet. The row 507 in the path table #2 indicates that, upon receipt of a packet addressed from the communication apparatus A 101 to the communication apparatus B 102 like the case of the row 505, the relay apparatus 1_104 should transfer the packet to the relay apparatus 3_106. As noted, the relay apparatus 1_104 can hold different path information to be changed. For example, by enabling the path table #1 when the relay apparatus 2_105 is working normally and by enabling the path table #2 when a failure occurs in the relay apparatus 2_105, packets can be delivered to the communication apparatus B 102 without fail.

The relay apparatus 1_104 in this embodiment needs to hold at least information on final destination addresses and transfer destination addresses and information associating combinations of a final destination address and a transfer destination address with their validity periods. The tables shown in FIGS. 4, 5A, and 5B are merely an example of such information; these tables may be replaced by a different style of table or a discretional format of data including the aforementioned information.

For example, the relay apparatus 1_104 may not hold the path table validity period management table 209 but hold only one path table 210 including information on validity period in each row. Specifically, one path table 210 may include rows 505, 506, and 507; the row 505 may further include information indicating a validity period from January 1, 2000 until December 31, 2004, the row 506 may further include information indicating a validity period from January 1, 2000 until December 31, 2009, and the row 507 may further include information indicating a validity period from January 1, 2005 until December 31, 2009.

The relay apparatus 2_105, the relay apparatus 3_106, and the relay apparatus 4_107 also hold a path table validity period management table and a plurality of path tables. Since the structures of the tables can be the same as those illustrated in FIGS. 4, 5A, and 5B, providing drawings showing the tables and the detailed description of the tables are omitted. However, it should be noted that the information in the path tables for the same validity period held by different relay apparatuses must be consistent among the relay apparatuses.

For example, according to FIGS. 4, 5A, and 5B, the relay apparatus 1_104 holds the address of the relay apparatus 2_105 as the information designating a transfer destination for the packets addressed from the communication apparatus A 101 to the communication apparatus B 102 for a validity period from January 1, 2000 until December 31, 2004 (hereinafter, also referred to as first period) (see the rows 404 and 505). The relay apparatus 1_104 holds the address of the relay apparatus 3_106 as the information designating a transfer destination for the same packets for the validity period from January 1, 2005 until December 31, 2009 (hereinafter, also referred to as second period) (see the rows 405 and 507).

In these conditions, the relay apparatus 1_104 transfers packets including a timestamp within the first period addressed from the communication apparatus A 101 to the communication apparatus B 102 to the relay apparatus 2_105 (the detailed procedure is described later). Accordingly, the relay apparatus 2_105 at least needs to hold information designating a transfer destination for the packets addressed from the communication apparatus A 101 to the communication apparatus B 102 (for example, the address of the communication apparatus B 102) for the first period in the path table validity period management table and a path table. The relay apparatus 3_106 however does not need to hold information designating a transfer destination of the same packets for the first period.

In the meanwhile, the relay apparatus 1_104 transfers packets including a timestamp within the second period to the relay apparatus 3_106, not the relay apparatus 2_105. Accordingly, the relay apparatus 2_105 does not need to hold information designating the transfer destination for the same packets for the second period but the relay apparatus 3_106 at least needs to hold information designating the transfer destination (for example, the address of the relay apparatus 4_107) for the packets addressed from the communication apparatus A 101 to the communication apparatus B for the second period.

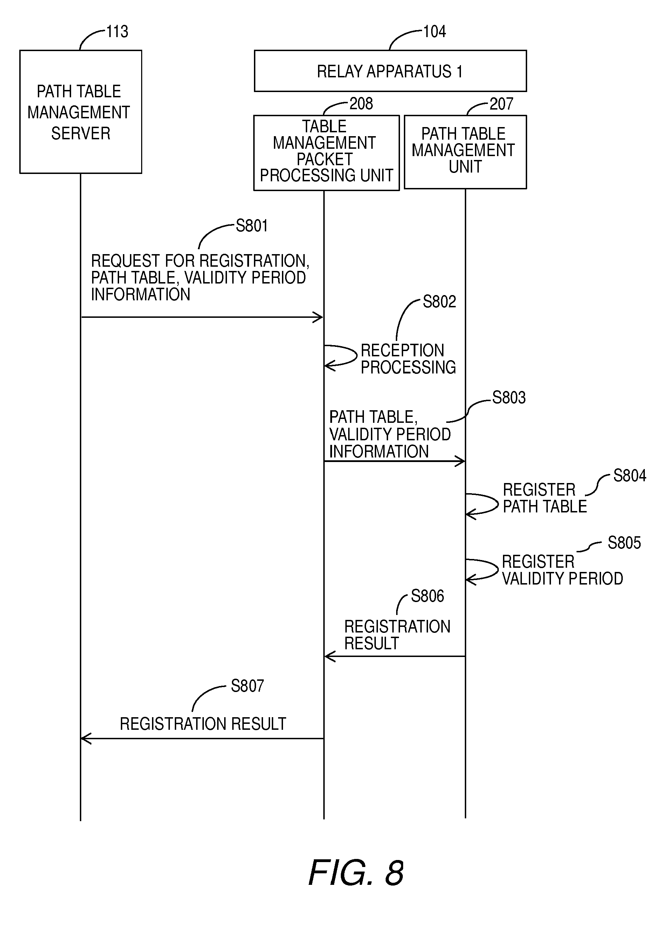

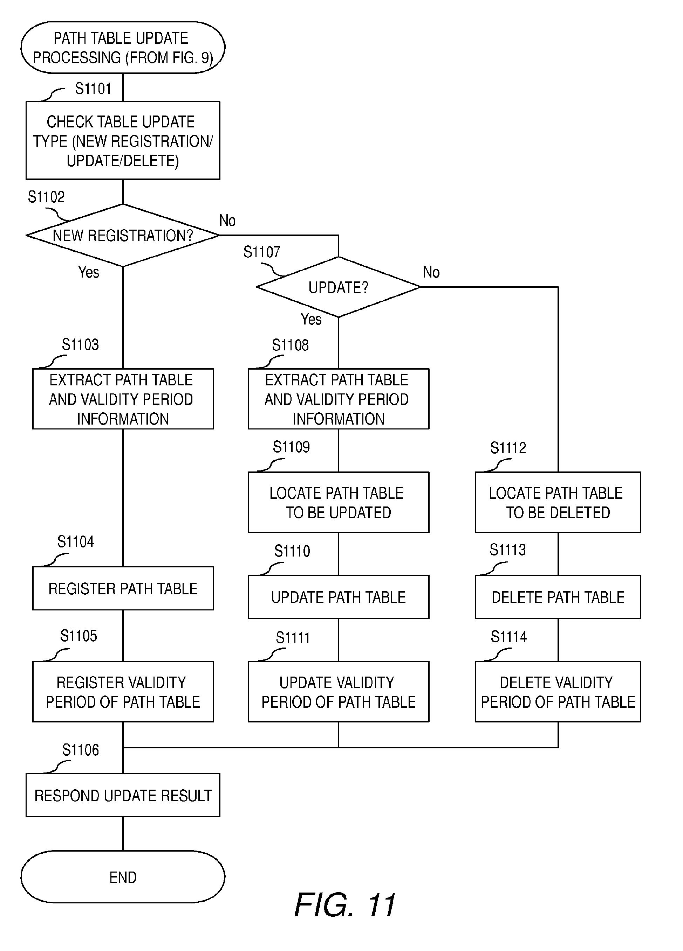

The path information for each validity period held by the individual relay apparatuses needs to be consistent among the relay apparatuses by including information to deliver packets with a timestamp in the same validity period to the communication apparatus of the final destination. New registration and update of a path table, which will be described later (refer to FIGS. 8 and 11), are performed so that the information in the path tables held by the individual relay apparatuses will be consistent among the relay apparatuses.

### (Packet structure)

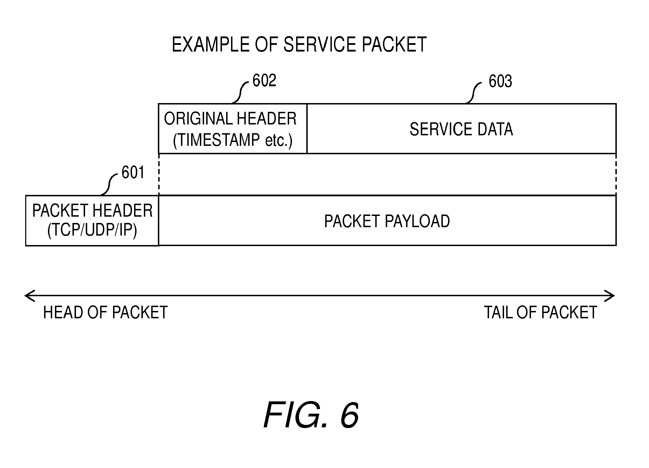

Next, with reference to FIG. 6, a structure of a service packet transmitted between communication apparatuses is described.

A service packet is mainly composed of a packet header 601 and a packet payload; the packet payload is composed of an original header 602 and service data 603. The packet header 601 includes header information required for common communication protocols such as TCP/IP or UDP/IP and Ethernet. The original header 602 includes information required to resolve a transfer destination address such as a timestamp, a path number, and a final destination address. The service data 603 includes a part or all of a service message. The information to be stored in the original header 602 may be stored in the general header 601 as standard items or may be stored in an extended area. In either case, the area for the original header 602 may be unnecessary.

### (Sequence of transferring service message)

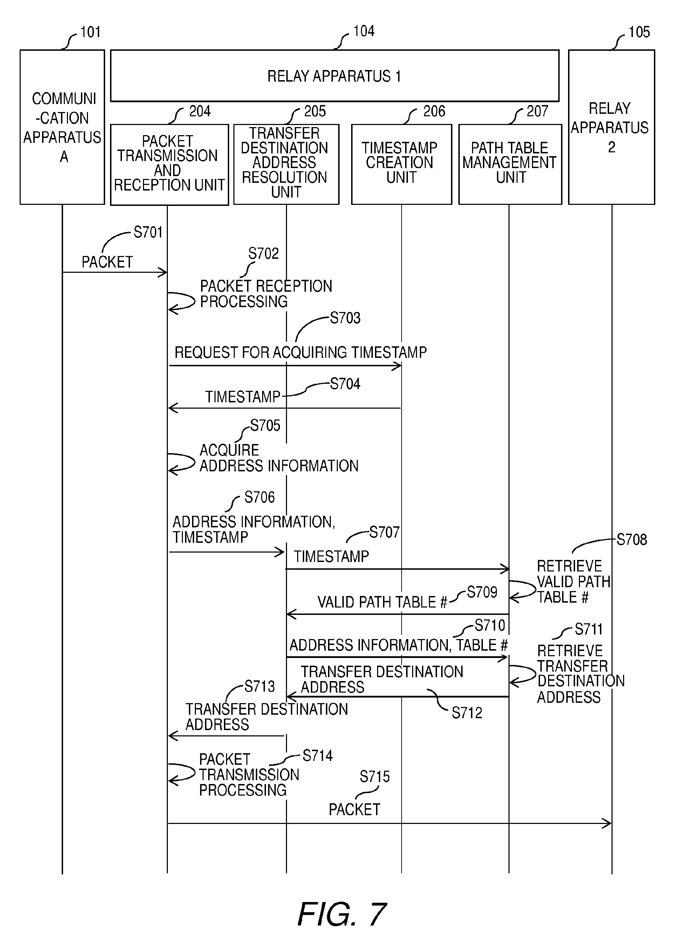

Next, with reference to FIG. 7, a sequence of processing when the relay apparatus 1_104 transfers a service message received from the communication apparatus A 101 to the relay apparatus 2_105 is described.

First, the communication apparatus A 101 sends packets to the relay apparatus 1_104 (Step S701).

The packet transmission and reception unit 204 of the relay apparatus 1_104 performs reception of the packets received via the NIC 202 and reassembles the packets into a service message (Step S702). If the received packets include timestamps, the processing proceeds to Step S705. If the received packets do not include timestamps, the packet transmission and reception unit 204 requests the timestamp creation unit 206 for a timestamp of the reception time (Step S703) and acquires a timestamp (Step S704).

Next, the packet transmission and reception unit 204 acquires transfer source address information and final destination address information from the received packets (Step S705). The information on these addresses is stored in the IP header or the original header. The packet transmission and reception unit 204 forwards the timestamp and the address information to the transfer destination address resolution unit 205 (Step S706).

The transfer destination address resolution unit 205 forwards the timestamp to the path table management unit 207 (Step S707). The path table management unit 207 searches the path table validity period management table 209 with the received timestamp for valid path table numbers (Step S708) and forwards a list of path table numbers hit in the search to the transfer destination address resolution unit 205 (Step S709).

Next, the transfer destination address resolution unit 205 forwards the address information received at Step S706 and a valid path table number to the path table management unit 207 (Step S710). The path table management unit 207 acquires the transfer destination address associated with the address information received at Step S706 (that is, the value of the transfer destination address 504 associated with the final destination address 503 identical to the final destination address information included in the received packet) from the path table 210 identified with the valid path table number received at Step S710 (Step S711) and forwards it to the transfer destination address resolution unit 205 (Step S712). Steps S710 to S712 are repeated as many times as the number of valid path tables. The transfer destination address resolution unit 205 forwards a list of destination addresses to the packet transmission and reception unit 204 (Step S713).

The packet transmission and reception unit 204 creates transmission packets for each of the forwarded transfer destination addresses (Step S714) and sends the packets to the destinations via the NIC 202 or 203 (Step S715).

### (Sequence of updating path table)

Next, with reference to FIG. 8, a sequence of processing when the path table management server 113 registers a new path table to the relay apparatus 1_104 is described.

First, the path table management server 113 sends packets of a registration request to the relay apparatus 1_104 (Step S801). These packets include information for the path table to be registered and the validity period.

Next, the table management packet processing unit 208 in the relay apparatus 1_104 performs reception of the packets received via the NIC 201 to reassemble the packets into a message for registration of a path table (Step S802). The table management packet processing unit 208 forwards the path table to be registered and the validity period to the path table management unit 207 (Step S803).

Next, the path table management unit 207 registers the new path table (Step S804), registers the validity period of the registered path table to the path table validity period management table (Step S805), and forwards a result of registration to the table management packet processing unit (S806).

The table management packet processing unit 208 responds the result of registration to the path table management server 113 (Step S807).

### (Overall flowchart)

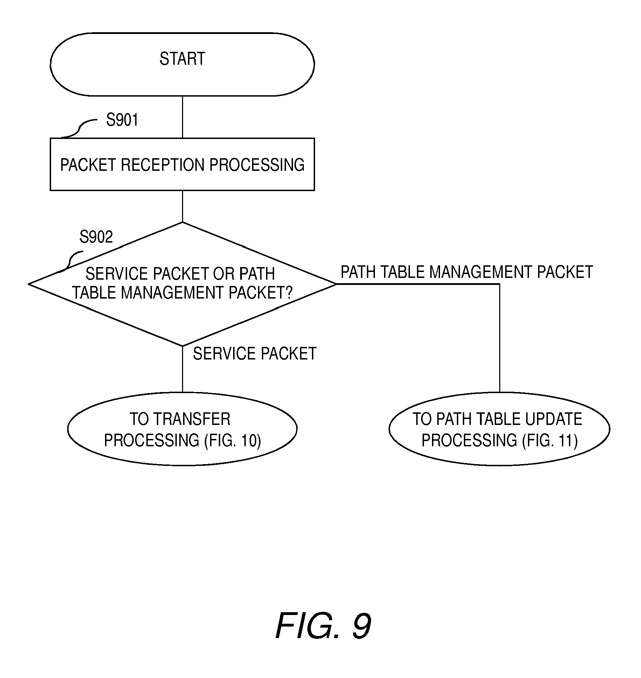

Next, the processing of the relay apparatus 1_104 that has received a packet is described with the flowcharts of FIGS. 9 to 11. These flowcharts are to explain the processing of the relay apparatus 1_104 illustrated in FIGS. 7 and 8 in detail.

FIG. 9 is an overall flowchart of the processing of the relay apparatus 1_104.

At Step S901, the packet transmission and reception unit 204 or the table management packet processing unit 208 performs reception processing.

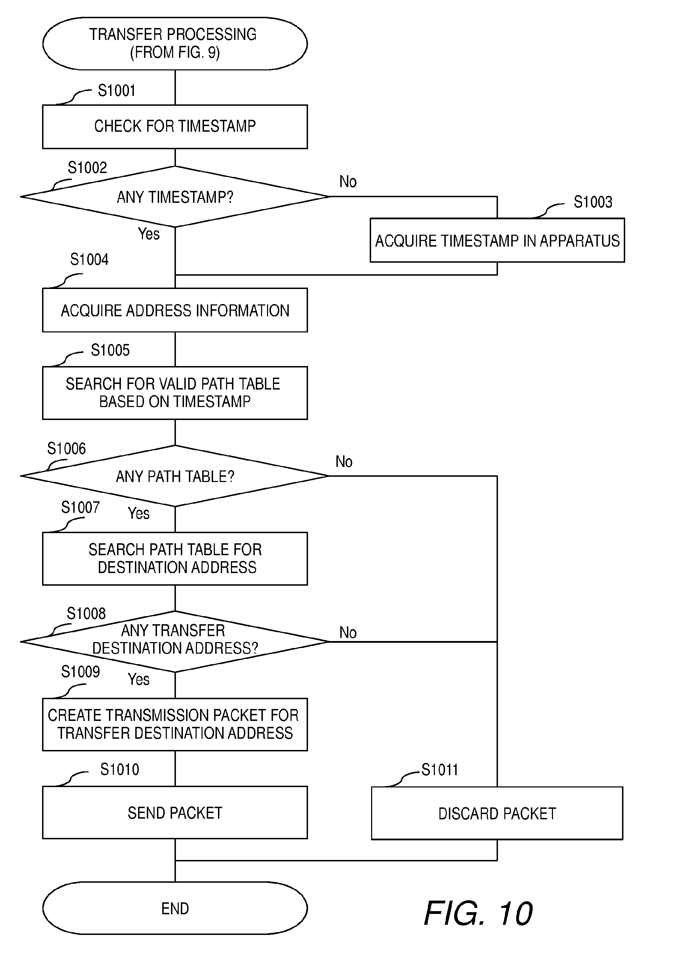

At Step S902, the relay apparatus 1_104 identifies whether the received packet is a service packet or a path table management packet. If the received packet is a service packet, the processing proceeds to transfer processing (FIG. 10); if the received packet is a management packet, the processing proceeds to path table update processing (FIG. 11).

### (Transfer processing)

FIG. 10 illustrates transfer processing of the relay apparatus 1_104.

At Step S1001, the packet transmission and reception unit 204 checks for a timestamp of the received packet.

At Step S1002, the packet transmission and reception unit 204 determines whether the received packet includes a timestamp. If a timestamp is included, the processing proceeds to Step S1004; if no timestamp is included, the processing proceeds to Step S1003.

At Step S1003, the packet transmission and reception unit 204 requests the timestamp creation unit 206 for a current timestamp in the apparatus and acquires a timestamp. The timestamp acquired at this step is attached to the packet as the timestamp of the service message and is transferred to the final destination in the subsequent processing.

At Step S1004, the packet transmission and reception unit 204 acquires transfer source address information and final destination address information from the packet header or the original header of the received packet. The address information acquired at this step becomes a key to retrieve transfer destination address information from a path table 210.

At Step S1005, the packet transmission and reception unit 204 forwards the timestamp and address information acquired from the received packet to the transfer destination address resolution unit 205 to acquire the transfer destination address. The transfer destination address resolution unit 205 first forwards the timestamp to the path table management unit 207 to search for a list of valid path tables.

At Step S1006, the transfer destination address resolution unit 205 checks whether any valid path table 210 (in other words, any path table 210 associated with the validity period including the time of the timestamp forwarded by the packet transmission and reception unit 204) exists. If no valid path table 210 exists, the processing proceeds to Step S1101. If one or more valid path tables 210 exist, the processing proceeds to Step S1007.

At Step S1007, the transfer destination address resolution unit 205 forwards the path table numbers and the address information acquired from the received packet to the path table management unit 207 to request the path table management unit 207 to search for transfer destination addresses in accordance with the path tables. Specifically, the transfer destination address resolution unit 205 retrieves a transfer destination address 504 associated with a final destination address 503 identical to the final destination address information included in the received packet from each valid path table 210.

At Step S1008, the transfer destination address resolution unit 205 checks whether any transfer destination address has been acquired through the search at Step S1007. If no transfer destination address is hit in any of the valid path tables 210, the transfer destination address resolution unit 205 proceeds to Step S1011. If some transfer destination address is hit in one or more path tables 210, the transfer destination address resolution unit 205 forwards a list of retrieved transfer destination addresses to the packet transmission and reception unit 204 and the processing proceeds to S1009.

At Step S1009, the packet transmission and reception unit 204 creates a transmission packet for each of the transfer destination addresses. In the creating, the packet transmission and reception unit 204 stores information, such as the timestamp, required for the transfer processing in the relay apparatuses the packet is to go through to the packet header or the original header.

At Step S1010, the packet transmission and reception unit 204 sends the packets to the transfer destinations.

At Step S1011, since the transfer destination address resolution is failed, the packet transmission and reception unit 204 discards the received service message.

### (Path table update processing)

FIG. 11 illustrates path table update processing of the relay apparatus 1_104.

At Step S1101, the table management packet processing unit 208 checks the message type (new registration, update, or delete) of the management message received from the path table management server 113.

At Step S1102, the table management packet processing unit 208 identifies whether the message type is new registration. If the message type is new registration, the table management packet processing unit 208 proceeds to Step S1103; if the message type is other than new registration, the table management packet processing unit 208 proceeds to Step S1107.

At Step S1103, the table management packet processing unit 208 acquires information for the new path table to be registered and the validity period and forwards them to the path table management unit 207.

At Step S1104, the path table management unit 207 creates a new path table and stores the path information.

At Step S1105, the path table management unit 207 newly registers information on the validity period of the added path table to the path table validity period management table. The path table management unit 207 forwards a registration result to the table management packet processing unit 208.

At Step S1106, the table management packet processing unit 208 responds a table update result to the path table management server 113.

At Step S1107, the table management packet processing unit 208 identifies whether the message type is update. If the message type is update, the table management packet processing unit 208 proceeds to Step S1108; if the message type is not update, table management packet processing unit 208 proceeds to Step S1112.

At Step S1108, the table management packet processing unit 208 acquires information for the path table to be updated and the validity period and forwards them to the path table management unit 207.

At Step S1109, the path table management unit 207 locates the path table to be updated.

At Step S1110, the path table management unit 207 updates path information in the path table to be updated.

At Step S1111, the path table management unit 207 updates information on the validity period of the updated path table in the path table validity period management table.

At Step S1112, the path table management unit 207 locates the path table to be deleted.

At Step S1113, the path table management unit 207 deletes the path table to be deleted.

At Step S1114, the path table management unit 207 deletes information on the validity period of the deleted path table from the path table validity period management table.

### (Advantageous effects of this embodiment)

Here is an example where, instead of this invention, an existing technique is applied to the communication system illustrated in FIG. 1. The path tables of the relay apparatuses are changed, for example, when a failure occurs or when the relay apparatuses receive an instruction from an external controller. Assume that the path table #1_210-1 in the relay apparatus 1_104 is changed to the path table #2_210-2 at 0:00 a.m. on January 1, 2005. In this instance, the path tables held by the relay apparatuses 2_105 to 4_107 are also changed from the tables consistent with the path table #1_210-1 into the tables consistent with the path table #2_210-2 at 0:00 a.m. on January 1, 2005.

In this example, if the relay apparatus 1_104 receives a packet addressed from the communication apparatus A 101 to the communication apparatus B 102 before 0:00 a.m. on January 1, 2005, the relay apparatus 1_104 determines the destination of the packet to be the relay apparatus 2_105 based on the path table #1_210-1 and sends the packet. However, if the time of reception of this packet at the relay apparatus 2_105 is later than 0:00 a.m. on January 1, 2005, the relay apparatus 2_105 refers to the path table consistent with the path table #2_210-2 to determine the destination of this packet. Since this path table is not consistent with the path table #1_210-1, the table may not include information designating the destination of the packet addressed from the communication apparatus A 101 to the communication apparatus B 102.

Accordingly, the relay apparatus 2_105 may be unable to determine the destination of packet and discard the received packet. In the case where path tables are changed in accordance with an instruction from the external controller, the above-described problem can occur because of the difference in the time of arrival of the instruction at the individual relay apparatuses.

Contrastingly, in this embodiment, if the relay apparatus 1_104 receives a packet addressed from the communication apparatus A 101 to the communication apparatus B 102 before 0:00 a.m. on January 1, 2005, the packet includes a timestamp of the time before 0:00 a.m. on January 1, 2005. If the received packet does not include a timestamp, the relay apparatus 1_104 attaches a timestamp of a time before 0:00 a.m. on January 1, 2005. The relay apparatus 1_104 determines the destination of this packet to be the relay apparatus 2_105 based on the path table #1_210-1 associated with this timestamp and sends the packet.

The timestamp included in this packet is not altered and is referred to by all the relay apparatuses the packet goes through until reaching the final destination of the communication apparatus B 102. Accordingly, even if the reception time of this packet is later than 0:00 a.m. on January 1, 2005, the relay apparatus 2_105 refers to the path table consistent with the path table #1_210-1 to determine the destination of this packet. As a result, the destination of this packet can be determined unfailingly.

This embodiment attains a communication system that can correctly deliver a packet sent at any time to the final destination by eliminating inconsistency in path information in the relay apparatuses.

In this embodiment, the path table validity period management table 209 can be configured in such a manner that at least a part of the validity period of a path table 210 is overlapped with the validity period of another path table 210. Such a configuration easily allows transferring one packet with a plurality of paths simultaneously.

In this embodiment, the communication apparatus A 101 of the original packet sender usually sends a packet including a timestamp indicating the time of sending; however, the communication apparatus A 101 may attach a timestamp indicating a different time to the packet. For example, in a case where a packet is scheduled to be sent in a certain time period and the relay apparatuses have path tables 210 valid in the time period, the communication apparatus A 101 may attach a timestamp of the scheduled time period to the packet and send the packet in a time period the communication cost or the communication load is lower than the scheduled time period. The same applies to a case where sending a packet in the scheduled time period is failed because of a network failure and the packet is resent in a different time period. This embodiment achieves flexible transmission scheduling easily.

### (Modifications of embodiment)

In the above-described embodiment, the information indicating validity periods of the path tables 210 is held in the path table validity period management table 209. The validity periods are merely an example of conditions to apply path information (specifically, at least a combination of a final destination address 503 and a transfer destination address 504) included in the path tables 210; the embodiment contributes to modifications where conditions other than the validity periods are defined. Hereinafter, representative modifications are described.

For example, each path table 210 may hold information on the version of the path information as an aforementioned condition. Specifically, the path table #1_210-1 may hold version information "1" and the path table #2_210-2 may hold version information "2". In this case, the communication apparatus A 101 sends a packet including version information. The relay apparatus 1_104 determines the transfer destination based on the path table #1_210-1 if the version information included in the received packet is "1", or based on the path table #2_210-2 if the version information is "2".

Alternatively, each path table 210 may include information indicating a position range where the path table 210 is to be applied as an aforementioned condition. In this description, the position range to apply the path table #1_210-1 is referred to as first position range and the position range to apply the path table #2_210-2 is referred to as second position range. In this modification, the communication apparatus A 101 is a mobile communication apparatus and sends a packet including information on the current position of the communication apparatus A 101. The relay apparatus 1_104 determines the transfer destination of the packet based on the path table #1_210-1 if the positional information included in the received packet indicates a place in the first position range; otherwise determines the transfer destination of the packet based on the path table #2_210-2 if the positional information indicates a place in the second position range.

The above-described position ranges may be managed in a separate table from the path tables 210, like the path table validity period management table 209.

The information of programs, tables, and files to implement the functions in the above-described embodiment can be stored in a storage device such as a non-volatile semiconductor memory, a hard disk drive, or an SSD (Solid State Drive), or a computer-readable non-transitory data storage medium such as an IC card, an SD card, or a DVD.

This invention is not limited to the above-described embodiment but includes various modifications. The above-described embodiment is explained in details for better understanding of this invention and is not limited to the one including all the elements described above.

## Claims

1. A packet relay apparatus comprising:
one or more communication interfaces coupled to a network;
a processor coupled to the one or more communication interfaces; and
a memory coupled to the processor,
wherein the packet relay apparatus holds path information including a plurality of combinations of a final destination and a next transfer destination of a packet and conditions to apply individual combinations of the path information, and
wherein the packet relay apparatus is configured to:
determine whether a received packet satisfies any of the conditions to apply individual combinations of the path information based on information included in the received packet; and
transfer the received packet to one or more next transfer destinations of one or more combinations of the path information associated with a condition determined to be satisfied and including a final destination identical to final destination information included in the received packet.

2. The packet relay apparatus according to claim 1,
wherein the conditions to apply individual combinations of the path information are validity periods of the individual combinations of the path information, and
wherein the packet relay apparatus is configured to determine that the received packet satisfies a condition to apply a combination of the path information in a case where time information included in the received packet indicates a time within a validity period of the combination of the path information.

3. The packet relay apparatus according to claim 2,
wherein the packet relay apparatus is configured to add new time information to be included in the received packet in a case where the received packet does not include time information, and
wherein the packet relay apparatus is configured to transfer the received packet to the one or more next transfer destinations without altering the time information included in the received packet.

4. A packet transfer method to be performed by a packet relay apparatus including one or more communication interfaces coupled to a network, a processor coupled to the one or more communication interfaces, and a memory coupled to the processor,
the packet relay apparatus holding path information including a plurality of combinations of a final destination and a next transfer destination of a packet and conditions to apply individual combinations of the path information,
the packet transfer method comprising:
a first step of determining whether a received packet satisfies any of the conditions to apply individual combinations of the path information based on information included in the received packet; and
a second step of transferring the received packet to one or more next transfer destinations of one or more combinations of the path information associated with a condition determined to be satisfied and including a final destination identical to final destination information included in the received packet.

5. The packet transfer method according to claim 4,
wherein the conditions to apply individual combinations of the path information are validity periods of the individual combinations of the path information, and
wherein, in the first step, the packet relay apparatus determines that the received packet satisfies a condition to apply a combination of the path information in a case where time information included in the received packet indicates a time within a validity period of the combination of the path information.

6. The packet transfer method according to claim 5, further comprising a third step of adding new time information to be included in the received packet in a case where the received packet does not include time information,
wherein, in the second step, the packet relay apparatus transfers the received packet to the one or more next transfer destinations without altering the time information included in the received packet.

7. A communication system comprising:
a plurality of packet relay apparatuses; and
a plurality of communication apparatuses each coupled to one or more of the plurality of packet relay apparatuses via a network,
wherein each of the plurality of packet relay apparatuses holds path information including a plurality of combinations of a final destination and a next transfer destination of a packet and conditions to apply individual combinations of the path information in such a manner that the plurality of combinations of the path information associated with the same condition are consistent among the plurality of packet relay apparatuses,
wherein each of the plurality of packet relay apparatuses is configured to:
determine whether a received packet satisfies any of the conditions to apply individual combinations of the path information based on information included in the received packet; and
transfer the received packet to one or more next transfer destinations of one or more combinations of the path information associated with a condition determined to be satisfied and including a final destination identical to final destination information included in the received packet.

8. The communication system according to claim 7,
wherein the conditions to apply individual combinations of the path information are validity periods of the individual combinations of the path information, and
wherein each of the plurality of packet relay apparatuses is configured to determine that the received packet satisfies a condition to apply a combination of the path information in a case where time information included in the received packet indicates a time within a validity period of the combination of the path information.

9. The communication system according to claim 8,
wherein each of the plurality of communication apparatuses is configured to send a packet including time information to a packet relay apparatus coupled to the communication apparatus,
wherein each of the plurality of packet relay apparatuses is configured to transfer the packet received from the communication apparatus or one of the other packet relay apparatuses to the one or more next transfer destinations without altering the time information included in the received packet.

10. The communication system according to claim 8,
wherein each of the plurality of communication apparatuses is configured to send a packet not including time information to a packet relay apparatus coupled to the communication apparatus,
wherein the packet relay apparatus that receives the packet from the communication apparatus is configured to add new time information to be included in the received packet and transfer the received packet including the added time information to the one or more next transfer destinations, and
wherein another packet relay apparatus that receives the packet including the added time information from the packet relay apparatus is configured to transfer the received packet to the one or more next transfer destinations without altering the time information included in the received packet.
